# DEMANDE DE BREVET EUROPEEN

(11) **EP 0 921 631 A1**
(43) Date de publication de la demande: **09.06.1999**
(21) Numéro de dépôt: 98811029.2
(22) Date de dépôt: 16.10.1998
(51) Int. Cl.: H02P 7/622

(54) **Procédé de commande de la vitesse d'un moteur asynchrone à induction monophasé**

(30) Priorité: 08.12.1997 FR 9715471
(71) Demandeur: SOMFY, F-74300 Cluses (FR)
(72) Inventeur: Orsat, Jean-Michel, 74300 Chatillon sur Cluses (FR); Bruno, Serge, 74460 Marnaz (FR)
(74) Mandataire: Meylan, Robert Maurice

(57) **Abrégé**

Procédé de commande de la vitesse d'un moteur asynchrone à induction monophasée, dont le stator est équipé d'un enroulement principal (BP) et d'un enroulement auxiliaire constitués de demi-enroulements (B1, B2) couplés magnétiquement et bobinés en sens opposés, selon lequel on alimente l'enroulement principal directement au moyen d'une source de courant alternatif et l'enroulement auxiliaire au moyen d'un courant délivré par un redresseur à double alternance et au moyen de deux interrupteurs de commutation (T1, T2) de manière à engendrer un courant déphasé de 90° dans l'enroulement auxiliaire. Le procédé consiste à faire varier le couple du moteur en modifiant le temps de fermeture/ouverture d'au moins l'un des interrupteurs.

## Description

La présente invention a pour objet un procédé de commande de la vitesse d'un moteur asynchrone à induction monophasé, dont le stator est équipé d'un enroulement principal et d'un enroulement auxiliaire constitués de demi-enroulements couplés magnétiquement et bobinés en sens opposés, de telle manière qu'un courant de sens déterminé crée dans ces demi-enroulements des champs magnétiques de sens opposés, selon lequel on alimente l'enroulement principal directement au moyen d'une source de courant alternatif et l'enroulement auxiliaire au moyen d'un courant délivré par un redresseur à double alternance et au moyen de deux interrupteurs de commutation, respectivement en série avec chacun des demi-enroulements auxiliaires et commandés par un circuit de commande assurant la fermeture/ouverture des interrupteurs à une fréquence égale à la fréquence de la tension d'alimentation, de manière à engendrer dans l'enroulement auxiliaire une tension alternative déphasée de 90° relativement à la tension dans l'enroulement principal.

Un tel procédé est appliqué dans le moteur à induction décrit dans le brevet US 4 520 303. Le circuit de commande est constitué d'un multivibrateur bistable assurant la commutation alternée de deux transistors, respectivement en série avec chacun des demi-enroulements auxiliaires. Ainsi alimenté, l'enroulement auxiliaire crée un champ tournant déphasé de 90° relativement au champ produit par l'enroulement principal, ce qui a pour effet d'entraîner le rotor du moteur en rotation. Aucun moyen n'est prévu pour modifier la vitesse du moteur.

Du brevet US 4 459 532, on connaît un moteur à enroulement auxiliaire dans lequel un courant alternatif déphasé de 90°, par rapport au courant dans l'enroulement principal, est obtenu au moyen de deux paires d'interrupteurs appairés en diagonale et commandés par un multivibrateur bistable.

Du brevet FR 2 717 017, au nom du demandeur, on connaît par ailleurs un dispositif d'alimentation pour moteur monophasé à deux enroulements comprenant un générateur de courant travaillant par modulation de largeur d'impulsions engendrant dans l'un des enroulements un courant alternatif déphasé de 90° relativement au courant dans l'autre enroulement. Ce dispositif permet de faire varier la vitesse du moteur en faisant varier l'amplitude de la tension de sortie du générateur de courant.

La présente invention a pour but de commander la vitesse d'un moteur de type défini plus haut par un procédé plus simple à mettre en oeuvre que le procédé selon l'art antérieur.

Le procédé selon l'invention est caractérisé en ce qu'on fait varier le couple du moteur en modifiant le temps de fermeture/ouverture d'au moins l'un des interrupteurs commandant l'alimentation de chacun des demi-enroulements auxiliaires.

Selon un premier mode d'exécution du procédé selon l'invention, à partir d'une fermeture/ouverture parfaitement alternée et de même durée des interrupteurs, on freine le moteur en réduisant le temps de fermeture d'au moins l'un des interrupteurs au cours de chaque période de la tension de la source, de telle sorte que le temps de fermeture soit inférieur à une demi-période de la tension d'alimentation.

Selon un autre mode d'exécution du procédé selon l'invention, à partir d'une fermeture/ouverture parfaitement alternée et de même durée des interrupteurs, on réduit le couple du moteur en augmentant le temps de fermeture d'au moins l'un des interrupteurs, au cours de chaque période de la tension d'alimentation, de telle sorte que le temps de fermeture soit supérieur à une demi-période de la tension d'alimentation.

Dans les deux cas, on obtient, au cours de chaque période du champ magnétique auxiliaire alternatif, une annulation passagère de ce champ. Cette annulation a pour effet de réduire le couple de sortie du moteur.

En fait, on modifie la caractéristique couple-vitesse du moteur. Il est ainsi possible de faire varier la courbe de fonctionnement du moteur pour l'adapter à des conditions particulières d'utilisation, comme celles, par exemple, d'une utilisation avec un frein mécanique à déblocage centrifuge, qui requiert un couple plus important au démarrage.

Comme circuit de commande, on utilisera, de préférence, un microprocesseur.

Le procédé selon l'invention sera mieux compris à la description d'un exemple de mise en oeuvre exposé en relation avec le dessin annexé, dans lequel :
la figure 1 représente schématiquement un moteur avec son circuit de commande ;
la figure 2 représente l'allure de la tension de la source d'alimentation ou du champ magnétique créé par l'enroulement principal ;
la figure 3 représente l'allure du champ créé par l'un des demi-enroulements auxiliaires ;
la figure 4 représente le champ créé par l'autre demi-enroulement auxiliaire dans le cas d'une limitation du temps d'ouverture de l'interrupteur associé ;
la figure 5 est une répétition de la figure 2 ;
la figure 6 représente à nouveau le champ créé par l'un des demi-enroulements auxiliaires ;
la figure 7 représente l'allure du champ créé dans l'autre demi-enroulement auxiliaire par la prolongation du temps de fermeture de l'interrupteur associé ; et
les figures 8 et 9 illustrent le cas où le temps de fermeture des interrupteurs des deux demi-enroulements est prolongé.

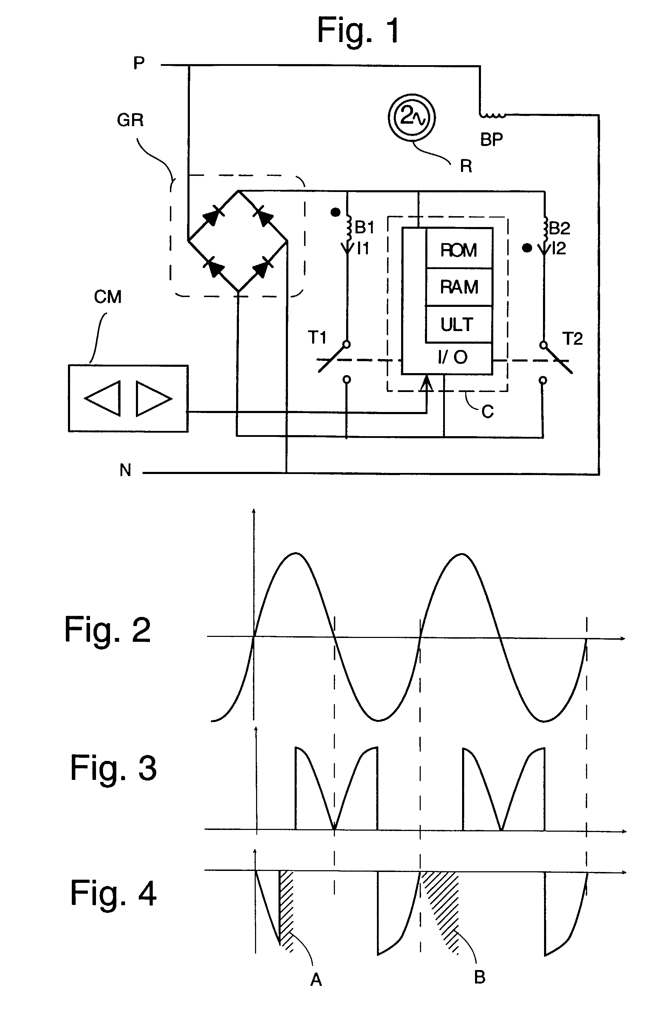

A la figure 1, le moteur est représenté schématiquement par son rotor R, son enroulement principal BP et son enroulement auxiliaire B1/B2. L'enroulement principal BP est alimenté directement par la tension d'alimentation, ici le secteur P, N, tandis que l'enroulement auxiliaire est alimenté par l'intermédiaire d'un pont de Graetz GR qui redresse les demi-alternances négatives de manière à obtenir une tension composée uniquement de demi-alternances positives, comme représentées à la figure 2b du brevet US 4 520 303.

L'enroulement auxiliaire est constitué de deux demi-enroulements B1 et B2 présentant une borne commune et bobinés en sens opposés de telle manière qu'une tension appliquée entre cette borne commune et les deux bornes indépendantes des demi-enroulements provoque, dans une spire de l'enroulement B1, un flux magnétique de sens opposé à celui provoqué dans une spire voisine de l'enroulement B2 et que le flux magnétique résultant dans l'entrefer entre le stator et le rotor est nul. De manière à obtenir un champ auxiliaire alternatif en quadrature relativement au champ créé dans l'enroulement principal BP, le courant dans les demi-enroulements B1 et B2 est contrôlé au moyen de deux interrupteurs T1 et T2, respectivement en série avec le demi-enroulement B1 et le demi-enroulement B2 et avec le pont GR. Les interrupteurs T1 et T2 seront en général constitués de transistors, de préférence des transistors à effet de champ. Ces transistors sont commandés par un circuit de commande C branché sur la diagonale de sortie de GR et constitué d'un microprocesseur, c'est-à-dire d'une unité logique de traitement ULT, d'une mémoire RAM, d'une mémoire ROM et d'une interface entrée/sortie I/O. Une commande manuelle CM permet de modifier les temps d'ouverture/fermeture des interrupteurs T1, T2 enregistrés dans le circuit de commande C.

Si les interrupteurs T1 et T21 sont ouverts et fermés de façon parfaitement alternée et pour une même durée, de telle sorte que les demi-alternances de la tension prise sur le pont GR sont appliquées alternativement au demi-enroulement B1 et au demi-enroulement B2, on crée, dans l'un des demi-enroulements, par exemple B1, un champ ayant l'allure représentée à la figure 3 et, dans l'autre demi-enroulement, un champ de même forme, mais de polarité inverse et déphasé de 90°. Le champ auxiliaire résultant a l'allure représentée à la figure 2 et du brevet US 4 520 303.

Si maintenant, on réduit le temps de fermeture de l'un des interrupteurs, par exemple T2, pour reprendre l'exemple considéré, à chaque période dans un quart d'alternance, comme représenté en A, figure 4, le champ résultant est annulé un court instant lors de chaque période, ce qui a pour effet de sous-alimenter le moteur, c'est-à-dire de réduire son couple et sa vitesse. Un quart d'alternance complet peut être supprimé comme représenté en hachuré B. Il est possible de réduire le temps de fermeture des deux interrupteurs T1 et T2.

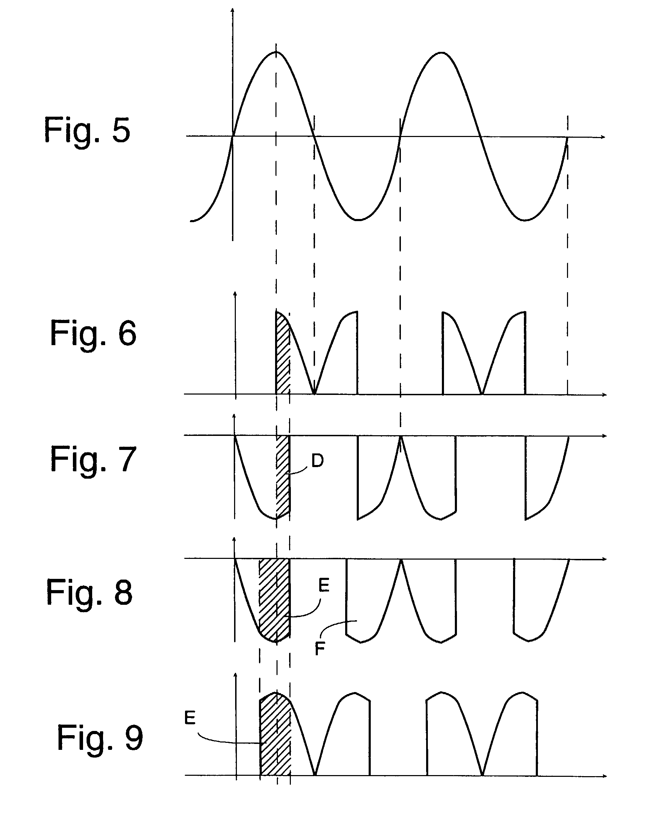

L'annulation recherchée du champ résultant de la combinaison des champs dans les deux demi-enroulements B1 et B1 peut également être obtenue par addition ou chevauchement, c'est-à-dire, à partir d'une fermeture/ouverture parfaitement alternée et de même durée des interrupteurs T1 et T2, en augmentant le temps de fermeture de l'un des interrupteurs T1 ou T2 ou des deux interrupteurs à la fois. Ce mode opératoire est illustré par les figures 5 à 9.

La figure 5 reproduit à nouveau l'allure du champ créé dans l'enroulement principal BP qui correspond à l'allure de la tension alternative d'alimentation. Les figures 6 et 5 représentent à nouveau l'allure des champs créée dans les deux demi-enroulements B1 et B2. L'interrupteur T1 est fermé périodiquement durant deux quarts de période consécutifs exactement. La fermeture de l'interrupteur T2 est par contre prolongée à la fin de chaque période. Cette prolongation correspond à la zone hachurée D, figure 7. On constate que dans cette zone hachurée, le champ magnétique créé dans B2 chevauche le champ créé dans B1 et que la somme de ces champs est donc nulle dans la zone hachurée. Le champ auxiliaire résultant de la combinaison des champs dans B1 et B2 s'annule donc périodiquement pendant une durée correspondant à la largeur de la zone hachurée D, ce qui a pour effet de freiner le moteur. On constate qu'on obtient le même résultat que par la réduction du temps de fermeture de T2 décrite plus haut, à savoir la diminution du couple de sortie du moteur.

L'allongement du temps de fermeture de l'un des interrupteurs, par exemple T2, peut se faire en avançant le début de la fermeture de T1 ou T2 ou à la fois en avançant le début de la fermeture de T1 ou T2 et en prolongeant la durée de la fermeture, pour le quart d'alternance F. On obtient dans ce cas deux chevauchements par période, ce qui réduit encore le champ auxiliaire.

Il est bien entendu possible d'augmenter à la fois le temps de fermeture de l'interrupteur T1 et celui de l'interrupteur T2. Cette situation est représentée à la figure 9 considérée en combinaison avec la figure 8. La zone de chevauchement obtenue est représentée par la zone hachurée E.

Par le jeu des temps de fermeture et d'ouverture des interrupteurs T1 et T2, il est ainsi possible de combiner toutes sortes de chevauchements.

En ce qui concerne les deux modes d'exécution, on peut faire les remarques suivantes : le premier mode d'exécution revient à sous-alimenter le moteur d'où un léger effet de saccades, tandis qu'avec le second mode d'exécution, on n'a pas d'effet de saccades, mais le freinage du moteur s'obtient par une augmentation de la consommation de courant.

## Revendications

1. Procédé de commande de la vitesse d'un moteur asynchrone à induction monophasé, dont le stator est équipé d'un enroulement principal (BP) et d'un enroulement auxiliaire constitués de demi-enroulements (B1, B2) couplés magnétiquement et bobinés en sens opposés, de telle manière qu'un courant de sens déterminé crée dans ces demi-enroulements des champs magnétiques de sens opposés, selon lequel on alimente l'enroulement principal directement au moyen d'une source de courant alternatif et l'enroulement auxiliaire au moyen d'un courant délivré par un redresseur à double alternance et au moyen de deux interrupteurs de commutation (T1, T2), respectivement en série avec chacun des demi-enroulements auxiliaires et commandés par un circuit de commande (C) assurant la fermeture/ouverture des interrupteurs à une fréquence égale à la fréquence de la tension d'alimentation, de manière à engendrer dans l'enroulement auxiliaire une tension alternative déphasée de 90° relativement à la tension dans l'enroulement principal, caractérisé en ce qu'on fait varier le couple du moteur en modifiant le temps de fermeture/ouverture d'au moins l'un des interrupteurs.

2. Procédé selon la revendication 1, caractérisé en ce qu'à partir d'une fermeture/ouverture parfaitement alternée et de même durée des interrupteurs, on réduit le couple du moteur en réduisant le temps de fermeture d'au moins l'un des interrupteurs au cours de chaque période de la tension de la source, de telle sorte que le temps de fermeture soit inférieur à une demi-période de la tension d'alimentation.

3. Procédé selon la revendication 1, caractérisé en ce qu'à partir d'une fermeture/ouverture parfaitement alternée et de même durée des interrupteurs, on freine le moteur en augmentant le temps de fermeture d'au moins l'un des interrupteurs, au cours de chaque période de la tension d'alimentation, de telle sorte que le temps de fermeture soit supérieur à une demi-période de la tension d'alimentation.
